# EUROPEAN PATENT SPECIFICATION

(11) **EP 3 325 860 B1**
(45) Date of publication and mention of the grant of the patent: **17.02.2021**
(21) Application number: 16750534.6
(22) Date of filing: 14.07.2016
(51) Int. Cl.: F16K 15/02

(54) **ONE-WAY DEGASSING VALVE AND CONTAINER WITH SUCH A VALVE**
EINWEG-ENTGASUNGSVENTIL UND BEHÄLTER MIT SOLCH EINEM VENTIL
CLAPET DE DÉGAZAGE UNIDIRECTIONNEL ET RÉCIPIENT AYANT UN TEL CLAPET

(30) Priority: 24.07.2015 NL 2015219
(43) Date of publication of application: 30.05.2018
(73) Proprietor: Flexible Consulting B.V., 5051 DS Goirle (NL)
(72) Inventor: REIJNDERS, Wander, 2382 Poppel (BE)
(74) Representative: EP&C
(86) International application number: PCT/NL2016/050524
(87) International publication number: WO 2017/018878

(56) References cited:
- EP-A1- 2 947 326
- WO-A1-00/37232
- DE-A1-102009 000 806
- FR-A1- 2 593 264
- GB-A- 2 484 403
- US-A- 4 209 485

## Description

The present invention relates to the field of plastic one-way degassing valves which are commonly used in packaging. For example plastic one-way degassing valves are used in containers to conserve goods, e.g. roasted coffee.

One-way degassing valves comprised in a container, e.g. a plastic container, are well known in the field of packaging. In response to a higher pressure inside the container than in the outside environment, the valve opens, thereby releasing said pressure, and closes again after the inside pressure has been reduced. The entry of ambient gasses into the container is prevented. Such valves are for instance used in containers that contain gas-producing substances, e.g. coffee releasing carbon dioxide after roasting, that degrade through contact with air, e.g. by oxidation or moisturizing. Another example is containers where yeast containing food products is packaged, e.g. dough, such as for pizza. These valves are for instance also used in containers, e.g. bags, e.g. 25 litre bags, that are to be stacked on top of each other, in which case the stack is more stable if the air inside the containers is allowed to escape as the stack is built.

EP-B-2 396 243 is an example of such a one-way degassing valve for degassing a container. The valve comprises an injection moulded plastic valve body with a bottom and peripheral edge extending from said bottom. The peripheral edge is configured to be attached to said container, e.g. by heat-sealing, and said bottom and a peripheral edge delimit a chamber that is open at the top. Said bottom comprises a valve seat on the upper face of said bottom. A central space within said chamber is formed by the space above said valve seat. The plastic valve body has a plurality of valve disk retainers. Each retainer has a base portion extending into said chamber from said bottom and a retaining portion inwards from said base portion. All base portions border said central space so as to surround said valve seat. The retaining portions each extend inwards from said base portion into said central space at a distance from the valve seat so that said plurality of valve disk retainers and valve seat surround a lower central space of said central space.

Moreover, one or more apertures extend through the bottom and end within said valve seat.

The valve of EP-B-2 396 243 moreover comprises a valve disk. Said valve disk is provided within and restricted to said lower central space by said valve disk retainers. Said valve disk is moreover adapted to cover said one or more apertures.

This type of valve is mass produced with a market that already for coffee packaging is many billions of valves per year.

Fabrication of plastic one-way degassing valve bodies is commonly performed by injection moulding. A central core is typically used that forms at least the lower central space with the valve seat and the retaining portions of the plurality of valve disk retainers. In order to retain the valve disk, said retaining portion protrudes into the central space, thereby forming a lateral protrusion internal to the chamber. High-speed moulding such small lateral internal protrusions requires a complex central core that is able to release the moulded plastic retainers without damaging said protrusions by moving sections of said central core underneath said protrusions away prior to lifting of the central core. Thus a central core with several very small parts, of which some are movable with respect to others, is needed, for instance internal core lifters or collapsible cores.

The fabrication of this type of central core involving movable parts is costly. Moreover, said complex central core entails a larger chance of defects during moulding and high mould maintenance costs.

The present invention aims to provide an improved one-way degassing valve that allows for simpler and therefore more economic manufacture.

To this end the invention proposes a one-way degassing valve according to claim 1. Preferred embodiments are defined in the dependent claims.

The inventor has devised a one-way degassing valve of which the manufacture can, as is preferred, be performed with a unitary central core that does not comprise movable parts, at least not for the formation of the retainers. The mould to form said inventive valve bodies may comprise in addition to said unitary central core, which defines at least the shape of the lower central space with the valve seat and the retaining portions of said valve disk retainers, at least a peripheral core that defines at least the side surfaces of said valve disk retainers that are oriented away from said lower central space, and at least a portion of the upper face of the bottom of the valve body away from said valve seat and surrounding said valve disk retainers, e.g. the second outer area, e.g. the second outer area and outermost area.

In an embodiment, after injection and sufficient solidification of the plastic valve body of the inventive one-way degassing valve, said peripheral core is moved prior to the motion of said unitary central core. After removal of the peripheral core the region around the valve disk retainers outside of the central space is thus empty. On lifting the central core part the inventive flexible valve disk retainers elastically bend outwards in response to the upwards pressure exerted thereon by the unitary central core, said outward elastic bending being such that the retaining portion of said valve disk retainer can be bent to a region outside of the central space. The flexibility of said valve disk retainer thus allows a unitary central core and removes the need for a complex central core involving movable parts.

The inventive one-way degassing valve may also allow for easy and efficient insertion of the valve disk into the lower central space. It is envisioned that in order to insert the valve disk it is positioned above the lower central space and then lowered, e.g. pushed, down into said lower central space. The outward bending of said flexible valve disk retainers in response to the force exerted by said valve disk yields an aperture sufficient for the disk to be inserted into said lower central space. This may reduce the need for the disk edge to bend during insertion.

Flexibility of the valve disk retainers may reside primarily from the design of the base portion, but may also be enhanced by the design, e.g. shape, of the retaining portion. The flexibility of the entire valve disk retainer is such that it allows elastic bending outwards with respect to the central space to such an extent that the retaining portions of said valve disk retainers are outside of the central space.

In order to achieve said flexibility, the inventive valve disk retainers preferably have, when viewed in side view, a width near the bottom thereof that is smaller than the width of a portion at the top thereof. The inventive valve disk retainer thus is preferably slender near the bottom and comprises a widening at a higher position.

To further facilitate the outward bending, e.g. upon lifting of the said central core, the retaining portion, viewed in side view, from its bottom upwards preferably gradually widens laterally into said central space. The gradual lateral widening may e.g. yield an upward curved or upward inclined surface. Such a gradual lateral widening converts part of the upward force exerted by the central core body upon lifting into a lateral force, thus leading to outward movement of said valve disk retainers.

Similarly, to further facilitate the outward bending, e.g. upon insertion of said valve disk, the retaining portion is preferable small at the top and from said top downwards gradually widens laterally into said central space. The gradual lateral widening may e.g. yield a downwards curved or downward inclined surface. Such a gradual lateral widening converts part of the downward force exerted by the valve disk upon insertion into a lateral force, thus leading to outward movement of said valve disk retainers.

The combination of such a gradual lateral widening from the base upwards and a gradual lateral widening portion from the top downwards may yield a triangular shape of the retaining portion, but may for instance also yield a half-spherical retaining portion.

In addition, the outward bending of the inventive flexible valve disk retainers may be facilitated by providing within the upper face of the bottom of the valve body an outermost area away from the valve seat, said outermost area being lower in height than the valve seat.

In preferred embodiments the valve is provided with a filter on or recessed in the lower face of the bottom of the valve body below the valve seat, e.g. said filter being secured by heat-sealing, e.g. ultrasonic sealing, to said valve body. The filter prevents small particles, e.g. from the roasting process, from entering the aperture and sealing or sticking to the sealing layer and thus the filter aids in maintaining the proper functioning of the valve.

Preferably the filter is secured at least along a periphery thereof of the valve body, preferably said periphery being at a greater diameter than said arrangement of valve disk retainers, so that an ultrasonic heat sealing apparatus can have one annular tool positioned during the sealing process in the region that is free around the valve disk retainers and engaging on the upper side of the valve body with another tool engaging on the filter on bottom side of the valve body.

In an embodiment the valve seat is convex.

In an embodiment the valve disk is substantially circular.

In an embodiment the base portions of the plurality of valve disk retainers are provided on top of a first outer area of the upper face of the bottom of the valve body, said first outer area adjacent to and surrounding the valve seat and said first outer area elevated with respect to the valve seat. The upper face of the bottom of the valve body further comprises a second outer area adjacent to and surrounding the first outer area, said second outer area being inclined downwards in the outward direction between the first outer area and the outermost area. The valve disk is substantially circular. The valve seat is substantially circular, and said first outer area and second outer area are ring-shaped.

In an embodiment the peripheral edge is a circular peripheral edge.

In an embodiment the one-way degassing valve moreover comprises a sealing layer on the valve disk at the side thereof facing the valve seat. Said sealing layer is configured to enhance the seal between said valve disk and said valve seat. Said sealing layer is configured to enhance the seal between said valve disk and said valve seat in the absence of an increased pressure underneath said bottom of the valve body with respect to the chamber and to permit said valve disk to be at least partially lifted above said valve seat in response to an increased pressure underneath said bottom of the valve body with respect to the chamber.

The standard sealing layer used in one-way degassing valves is an oily substance, e.g. silicon oil, e.g. a food-grade oily substance. This however poses a problem when said valves are used in containers for micro-wave heating of food. During micro-wave heating overpressure and steam is released through the degassing valve. The inventors have observed that the oily substance is carried along by the steam released through said degassing valve, thereby rapidly removing said oily substance and degrading the further operation of the valve. A different sealing layer for one-way degassing valves used in heating, e.g. micro-wave heating, of food is therefore desired.

The present invention also relates to a method for injection moulding a one-way degassing valve according to the claim 13.

Moreover, the present invention relates to a method for assembly of a one-way degassing valve according to claim 14.

The present invention also relates to a container for conserving goods, e.g. roasted coffee, according to claim 15.

The invention will now be discussed with reference to the drawings. In the drawings:

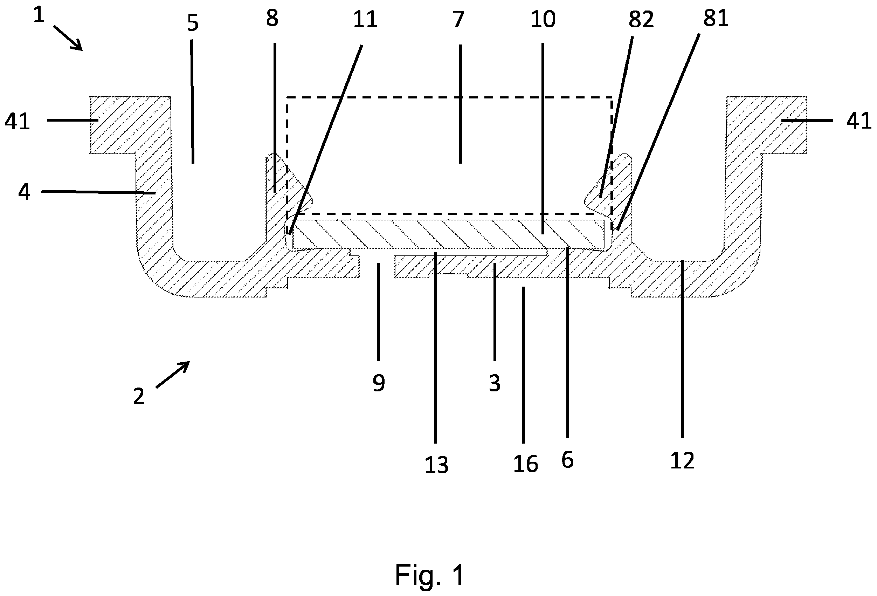

Fig. 1 shows a vertical cross-section of a one-way degassing valve according to the invention,
Fig. 2 shows another vertical cross-section of the one-way degassing valve of Figure 1,

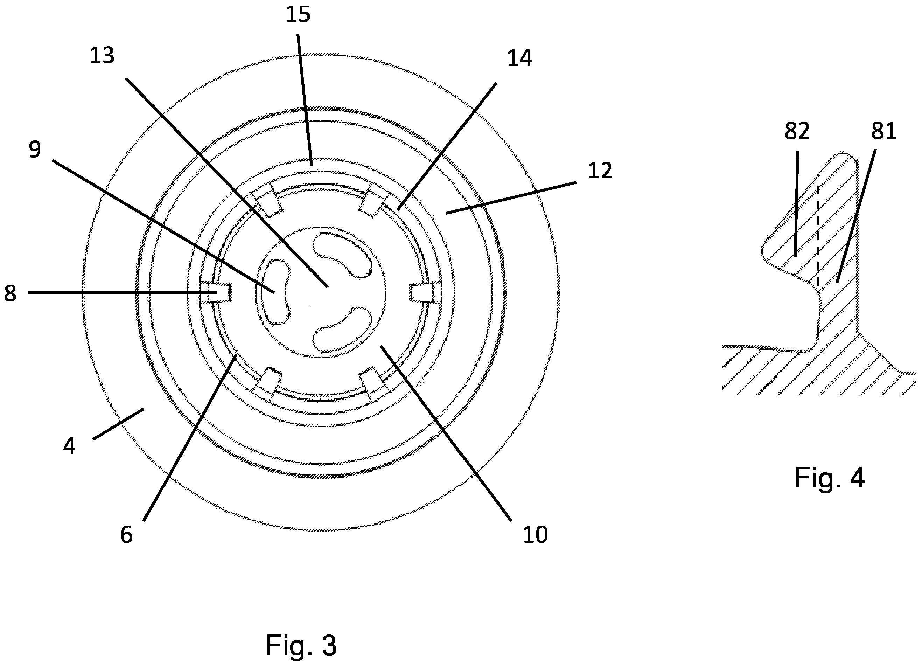

Fig. 3 shows a top view of the one-way degassing valve of Figure 1.
Fig. 4 shows a close-up of the valve disk retainer of Figure 1 in side view.

With reference to the drawings embodiments and optional features of the one-way degassing valve will be described.

The one-way degassing valve 1 for degassing a container comprises a one piece or monolithically molded plastic valve body 2 and a valve disk 10. As mentioned herein the valve 1 preferably also includes a filter (not shown).

The plastic valve body comprises a bottom 3 and a peripheral edge 4 extending from said bottom. In the present embodiment the bottom 3 is circular and the peripheral edge 4 is a ring-shaped peripheral edge.

The peripheral edge 4 is configured to be attached to the container, e.g. by heat sealing, e.g. ultrasonic. In the present embodiment the outward extending side portions 41 of the peripheral edge may be used for such attachment.

In embodiments the container is a bag or pouch, e.g. a consumer packaging filled with roasted coffee. In these embodiments the valve body may be secured over, e.g. on the inside of the bag or pouch, an opening formed in a flexible wall of the bag or pouch as is known in the art. The container may e.g. also contain a removable or breakable film cover over an opening, with the valve being secured to said film cover. For example the container is embodied for placement in a microwave.

In the present embodiment, the bottom 3 and peripheral edge 4 have the same exterior as a regular valve body, thus facilitating use of the one-way degassing valve with existing apparatus, e.g. apparatus for connecting the valve to a container.

The bottom 3 and one or more peripheral edges 4 enclose a chamber 5 that is open at the top. In the present embodiment the chamber 5 is substantially cylindrical.

The bottom 3 comprises a valve seat 6 on the upper face of said bottom. It is noted that the valve seat 6 merely denotes the area of the upper face of the bottom on which a valve disk can lie and does not necessarily entail certain structural features, such as a recessed portion within said bottom.

In the present embodiment the valve seat 6 is a circular valve seat centered in the upper face of the bottom. The valve seat moreover has a convex or dome shape, wherein the inner area of the valve seat lies higher than the outer area thereof.

The upper face of the bottom of the valve body further comprises an outermost area 12 away from the valve seat. In the present embodiment the outermost area 12 is ring-shaped and borders the peripheral edge 4. The outermost area 12 is lower in height than the valve seat to facilitate the outwards bending of the flexible valve disk retainers.

The valve seat is surrounded by a first outer area 14 adjacent to the valve seat. In the present embodiment the first outer area 14 is elevated with respect to the valve seat and is ring-shaped. The first outer area 14 is surrounded by a second outer area 15 adjacent to said first outer area 14. The second outer area 15 is inclined downward in the outward direction away from said valve seat so as to connect the higher-lying first outer area 14 to the lower-lying outermost area 12. In the present embodiment the second outer area 15 is ring-shaped.

The bottom of the valve body moreover comprises one or more apertures 9, in the present embodiment three apertures, through the bottom and ending within the valve seat 6.

The valve also comprises one or more recessed portions 13, in the present embodiment one recessed portion 13 in the center of the valve seat 6, said recessed parts having lateral dimensions smaller than the valve disk 10. In the present embodiment each of said apertures ends in the recessed part. Use of the recessed areas is advantageous, as these recessed areas facilitate opening of the valve disk by enlarging the area of the valve disk that is exposed to the gas inside the container and thus to an overpressure.

The space above the valve seat 6 within the chamber 5 is the central space 7. Said space thus extends from the upper face of the bottom 3 to the open top of the chamber.

The valve seat 6 is bordered by a plurality of valve disk retainers 8, more specifically base portions 81 thereof, so as to surround said valve seat 6. The valve disk retainers 8 are thus placed adjacent to the valve seat 6 and are spread around the perimeter of said valve seat 6. The valve disk retainers 8 are provided upon said first outer area 14.

Each of said valve disk retainers comprises a base portion 81 that extends into said chamber from the bottom of said valve body and a retaining portion 82 inwards from said base portion. Said retaining portions extend inwards from said base portion into said central space at a distance from the valve seat. Said plurality of valve disk retainers 8 and valve seat 6 surround a lower central space 11 of said central space 7.

Each valve disk retainer is flexible allowing elastic bending outwards with respect to the central space 7 to such an extent that the retaining portion 82 of said valve disk retainer 8 is outside of the central space.

In the present embodiment most of the flexibility is in the base portion 81 of the valve disk retainer 8. However, also the retaining portion 82 may show flexibility, which may contribute to reaching the required elastic outward bending.

The width of the base portion 81 of said valve disk retainer, viewed in side view, is comparable to the largest width of said retaining portion 82. In the present embodiment the width of the base portion of said valve disk is similar to or even slightly smaller than the largest width of said retaining portion.

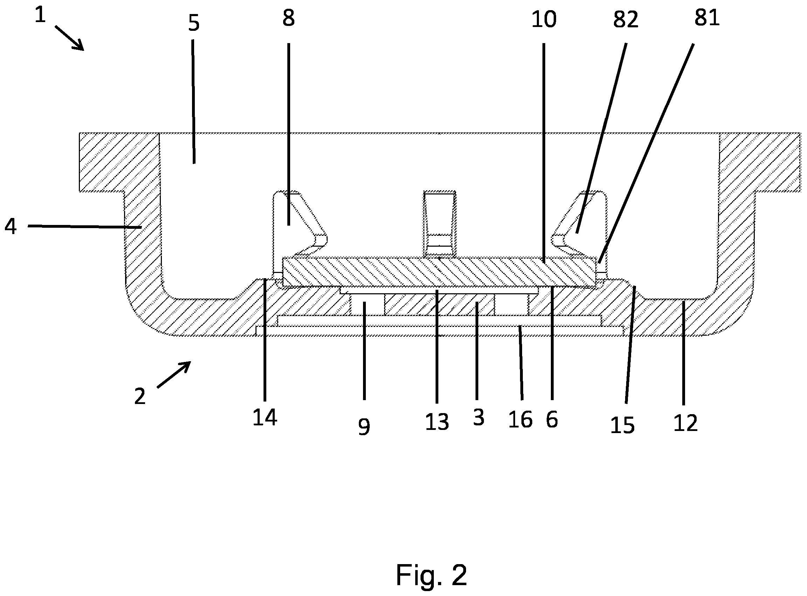

In a view in radial direction of the valve onto a retainer 8, see e.g. the central retainer in figure 2, the present embodiment shows more or less parallel, vertical sides of each retainer 8. In another design one or both of the radial retainer sides may for example be diverging towards the bottom, so broadening, to provide some enhanced sideways stability to the retainer 8 without impairing the mentioned flexing behaviour in view of placement of the valve disk.

In the present embodiment the retaining portion 82 gradually widens from the top downwards and from the base portion upwards, forming a triangular retaining portion, wherein the largest width is achieved at the height of the triangle corner inside the central space.

The base portion below the retaining portion may be relatively short with respect to the height of retaining portion. The height of the base portion between the bottom of said valve body and below the retaining portion may be approximately half or less than half of the height of the valve disk retainer. In the present embodiment said proportion of base portion height to height of the valve disk retainer is 0.2 - 0.4.

In the present embodiment, viewed in side view, the retaining portion comprises a lower portion that from its bottom upwards gradually widens laterally into said central space.

Again in side view the retaining portion is narrow at the top thereof and comprises a portion below said top that from said top downwards gradually widens laterally into said central space.

As mentioned, said retaining portion 82 gradually widens from the top of said valve disk retainer downwards and gradually widens from its bottom upwards, thereby forming a triangular retaining portion. In the present embodiment, said triangular shape is an acute-angled triangular shape. More particularly, said triangular shape has an upper side and a lower side, wherein said lower side is shorter than said upper side. The tilt with respect to horizontal of said lower side, e.g. 10° - 30°, is moreover less, than that of the upper side, e.g. 45° - 70°.

Moreover, in the present embodiment the corners of said valve disk retainer 82, both the corner at the top of the valve disk retainer as well as the triangle corner inside the central region and the corner between base portion and lower side of said triangular-shaped retaining portion, are rounded.

In the present embodiments the retaining portion 82 of the valve disk retainer is tapered laterally along the extension direction of the retaining portion.

The valve also comprises a valve disk 10, said valve disk provided within and restricted to said lower central space 11 by said valve disk retainers 8. Said valve disk 10 is adapted to cover said one or more apertures 9 and to cover any recessed portions 13 of the valve seat 6 around said apertures 9.

In the present embodiment said valve disk 10 has lateral dimensions only slightly smaller than the valve seat 6, so that there is little space between the outer edge of the valve disk 10 and the base portion 81 of the valve disk retainer 8. Moreover, the thickness of the valve disk 10 is smaller but comparable to the height of the base portion of the valve disk retainer below the retaining portion thereof, so that the valve disk 10 can only move upwards in said lower central space 11 over a distance smaller than its thickness. The valve disk 10 thus fills a substantial portion of said lower central space 11.

In the present embodiment a recess 16 is provided in the lower face of the bottom of the valve body below said valve seat, into which recess 16 a filter can be introduced. More particularly, said filter is introduced in the broader, lower recess of the two-stepped recess 16. Such filters, which are known in the field of one-way degassing valves, prevent small particles from entering the aperture and sealing to the sealing layer and thus aid in maintaining the proper functioning of the valve.

Preferably the filter is secured at least along a periphery, e.g. over a peripheral zone, thereof of to the valve body. As illustrated here by the form of the recess 16, and as preferred, this periphery of the filter has a greater diameter than the diameter of the circular array of valve disk retainers 8. This allows, as is preferred, the use of an ultrasonic heat sealing apparatus for securing the filter on the valve body. Herein one annular tool of the ultrasonic apparatus can be positioned during the sealing process in the region that is free around the valve disk retainers 8 and engaging on the upper side of the valve body. The another tool of the ultrasonic heat sealing apparatus can then be made to engage on the filter on bottom side of the valve body, e.g. placed in the recess 16.

The present embodiment comprises six valve disk retainers 8. Although the one-way degassing valve 1 should comprise a plurality of valve disk retainers 8 in order to retain the valve disk within the lower central space, any plurality is possible, for instance embodiments comprising e.g. three or four valve disk retainers 8.

It is envisioned that various types of valves will be produced, wherein in all valves the dimensions and shape of the valve seat 6, lower central space 11, valve disk retainers 8 and valve disk 10 are the same, and wherein the dimensions and shape of the outer region, e.g. the outermost area 12 and peripheral edge 4, are varied. For instance, the outermost area 12 can be larger or smaller, the bottom 3 away from the valve seat may be thicker or thinner and the peripheral edge 4 can be circular or polygonal.

In the present embodiment said valve disk 10 is a circular disk.

In the present embodiment said valve disk retainers 8 are formed integrally, e.g. injection molded of suitable plastic material, with the bottom 3 and peripheral edge 4 of said valve body 2.

Said plastic valve body 2 preferably has a diameter of between 10 - 30 mm, e.g. of about 15 mm, and a thickness of 3 - 15 mm, e.g. of about 6 mm, and said one-way degassing valve may e.g. have a weight of between 0.3 - 2 grams, e.g. 1 gram.

For instance the plastic valve body 2 comprises polyethylene.

For instance the valve disk 10 comprises silicon, nitrile rubber or similar types of rubber.

## Claims

1. One-way degassing valve (1) for degassing a container, e.g. a roasted coffee container, said valve comprising:
- a plastic valve body (2) comprising a bottom (3) and a peripheral edge (4) extending from said bottom, said peripheral edge configured to be attached to said container, said bottom and peripheral edge delimiting a chamber (5) that is open at the top,
wherein said bottom comprises a valve seat (6) on the upper face of said bottom,
wherein a central space (7) within said chamber is formed by the space above said valve seat,
wherein said plastic valve body comprises a plurality of valve disk retainers (8), each retainer having a base portion (81) extending into said chamber from said bottom and a retaining portion (82) inwards from said base portion, wherein all base portions border said central space so as to surround said valve seat and wherein said retaining portions each extend inwards from said base portion into said central space at a distance from the valve seat so that said plurality of valve disk retainers and valve seat surround a lower central space (11) of said central space,
and wherein one or more apertures (9) extend through the bottom and end within said valve seat,
- a valve disk (10), said valve disk provided within and restricted to said lower central space by said valve disk retainers, said valve disk adapted to cover said one or more apertures,
**characterized in that**
each valve disk retainer (8) is flexible allowing elastic bending outwards with respect to the central space to such an extent that the retaining portion of said valve disk retainer is outside of the central space.

2. A valve according to claim 1, wherein, in side view, the width of the valve disk retainer near the bottom is smaller than the width of a portion at the top thereof.

3. A valve according to any of the preceding claims, wherein, in side view, the retaining portion comprises a lower portion that from its bottom upwards gradually widens laterally into said central space.

4. A valve according to any of the preceding claims, wherein, in side view, the retaining portion comprises a top portion below the top of said valve disk retainer that from said top downwards gradually widens laterally into said central space.

5. A valve according to any of the preceding claims, wherein, in side view, the width of the base portion of said valve disk is substantially the same or smaller than the largest width of the retaining portion.

6. A valve according to any of the preceding claims, wherein, in side view, the retaining portion has a triangular shape, e.g. wherein said triangular shape is an acute-angled triangular shape, wherein, preferably, said triangular shape has an upper side and a lower side, wherein said lower side is shorter than said upper side, and wherein, preferably, the corner of said triangle in the central region and the top of the valve disk retainer is rounded.

7. A valve according to any of the preceding claims, wherein the valve is provided with a filter on or recessed in the lower face of the bottom of the valve body below said valve seat, e.g. said filter being secured by heat-sealing, e.g. ultrasonic sealing, to said valve body.

8. A valve according to any of the preceding claims, wherein the height of the base portion between the bottom of said valve body and the onset of the retaining portion is less than half of the height of the valve disk retainer.

9. A valve according to any of the preceding claims, wherein, along the extension direction of the retaining portion of said valve disk retainer, the retaining portion of the valve disk retainer is tapered laterally.

10. A valve according to any of the preceding claims, wherein the upper face of the bottom of the valve body comprises an outermost area (12) away from said valve seat, wherein said outer area is lowered in height with respect to the valve seat to facilitate the outward bending of the flexible valve disk retainers.

11. A valve according to any of the preceding claims, wherein said base portions of the plurality of valve disk retainers are provided on top of a first outer area (14) of the upper face of the bottom of the valve body, said first outer area adjacent to and surrounding the valve seat and said first outer area elevated with respect to the valve seat, wherein, preferably, said upper face of the bottom of the valve body further comprises a second outer area (15) adjacent to and surrounding the first outer area, said second outer area being inclined downwards in the outward direction between the first outer area (14) and the outermost area (12).

12. A valve according to any of the preceding claims, wherein the valve seat comprises one or more recessed portions (13), said recessed portions having lateral dimensions smaller than the valve disk, and wherein each of said one or more apertures end in a recessed portion of the valve seat.

13. Method for injection moulding a one-way degassing valve according to any of the preceding claims 1- 12, comprising the steps of:
- providing a mould for injection moulding said one-way degassing valve, said mould comprising:
- a movable unitary central core that forms at least the lower central space of said valve body with said valve seat and the retaining portions of said valve disk retainers,
- a movable peripheral core that forms at least the side surfaces of said valve disk retainers that are oriented away from said lower central space, and a portion of the upper face of the bottom of the valve body surrounding said valve seat and valve disk retainers, e.g. said second outer area, e.g. said second outer area and said outermost area,
- injecting molten plastic into said mould,
- lifting said peripheral core to a position at least higher than the top of the moulded valve disk retainers, and
- after lifting said peripheral core, lifting said unitary central core, whereby during said lifting the flexible valve disk retainers elastically bend outwards with respect to the central space to such an extent that the retaining portion of each valve disk retainer is outside of the central space and released from the unitary central core.

14. Method for assembly of a one-way degassing valve comprising the steps of:
- providing a valve body according to any of the preceding claims 1 - 12,
- providing a valve disk according to any of preceding claims 1 - 12,
- positioning said valve disk above said lower central region,
- lowering said valve disk to a position within said lower central region, whereby during said lowering the flexible valve disk retainers elastically bend outwards.

15. Container for conserving goods, e.g. roasted coffee, e.g. a roasted coffee container filled with roasted coffee, said container comprising:
- a container having a wall,
- a one-way degassing valve fitted over an opening in said wall on the inside of said container, said one-way degassing valve being embodied according to any of the preceding claims 1 - 12.

## Patentansprüche

1. Einwegentgasungsventil (1) zum Entgasen eines Behälters, z. B. eines Röstkaffeebehälters, wobei das Ventil umfasst:
- einen Kunststoffventilkörper (2), der einen Boden (3) und einen sich von dem Boden erstreckenden peripheren Rand (4) umfasst, wobei der periphere Rand ausgestaltet ist, um an dem Behälter befestigt zu werden, wobei der Boden und der periphere Rand eine Kammer (5) begrenzen, die an der Oberseite offen ist,
wobei der Boden einen Ventilsitz (6) auf der oberen Fläche des Bodens umfasst, wobei ein zentraler Raum (7) innerhalb der Kammer durch den Raum oberhalb des Ventilsitzes gebildet wird, wobei der Kunststoffventilkörper eine Vielzahl von Ventiltellerhalterungen (8) umfasst, wobei jede Halterung einen Basisabschnitt (81), der sich von dem Boden in die Kammer erstreckt, und einen Halteabschnitt (82) einwärts von dem Basisabschnitt aufweist, wobei alle Basisabschnitte den zentralen Raum so begrenzen, um den Ventilsitz zu umgeben, und wobei die Halteabschnitte sich jeweils einwärts von dem Basisabschnitt in den zentralen Raum in einem Abstand von dem Ventilsitz erstrecken, so dass die Vielzahl von Ventiltellerhalterungen und der Ventilsitz einen unteren zentralen Raum (11) des zentralen Raums umgeben,
und wobei sich eine oder mehrere Öffnungen (9) durch den Boden erstrecken und innerhalb des Ventilsitzes enden,
- einen Ventilteller (10), wobei der Ventilteller innerhalb des unteren zentralen Raums bereitgestellt wird und durch die Ventiltellerhalterungen auf den unteren zentralen Raum beschränkt ist, wobei der Ventilteller angepasst ist, um die eine oder mehreren Öffnungen abzudecken,
**dadurch gekennzeichnet, dass**
jede Ventiltellerhalterung (8) flexibel ist und eine elastische Biegung auswärts in Bezug auf den zentralen Raum in einem solchen Ausmaß erlaubt, dass der Halteabschnitt der Ventiltellerhalterung außerhalb des zentralen Raums ist.

2. Ventil nach Anspruch 1, wobei in der Seitenansicht die Breite der Ventiltellerhalterung in der Nähe des Bodens kleiner ist als die Breite eines Abschnitts an der Oberseite davon.

3. Ventil nach einem der vorstehenden Ansprüche, wobei in der Seitenansicht der Halteabschnitt einen unteren Abschnitt umfasst, der sich von seinem Boden nach oben hin allmählich lateral in den zentralen Raum erweitert.

4. Ventil nach einem der vorstehenden Ansprüche, wobei in der Seitenansicht der Halteabschnitt einen oberen Abschnitt unterhalb der Oberseite der Ventiltellerhalterung umfasst, der sich von der Oberseite nach unten hin allmählich lateral in den zentralen Raum erweitert.

5. Ventil nach einem der vorstehenden Ansprüche, wobei in der Seitenansicht die Breite des Basisabschnitts des Ventiltellers im Wesentlichen gleich oder kleiner ist als die größte Breite des Halteabschnitts.

6. Ventil nach einem der vorstehenden Ansprüche, wobei in der Seitenansicht der Halteabschnitt eine Dreiecksform aufweist, z.B. wobei die Dreiecksform eine spitzwinklige Dreiecksform ist, wobei vorzugsweise die Dreiecksform eine Oberseite und eine Unterseite aufweist, wobei die Unterseite kürzer als die Oberseite ist, und wobei vorzugsweise die Ecke des Dreiecks im zentralen Bereich und der Oberseite der Ventiltellerhalterung abgerundet ist.

7. Ventil nach einem der vorstehenden Ansprüche, wobei das Ventil mit einem Filter auf oder eingesenkt in der unteren Fläche des Bodens des Ventilkörpers unterhalb des Ventilsitzes bereitgestellt wird, z.B. wobei der Filter durch Heißversiegeln, z.B. Ultraschallversiegeln, an dem Ventilkörper gesichert ist.

8. Ventil nach einem der vorstehenden Ansprüche, wobei die Höhe des Basisabschnitts zwischen dem Boden des Ventilkörpers und dem Beginn des Halteabschnitts weniger als die Hälfte der Höhe der Ventiltellerhalterung ist.

9. Ventil nach einem der vorstehenden Ansprüche, wobei entlang der Erstreckungsrichtung des Halteabschnitts der Ventiltellerhalterung der Halteabschnitt der Ventiltellerhalterung lateral verjüngt ist.

10. Ventil nach einem der vorstehenden Ansprüche, wobei die obere Fläche des Bodens des Ventilkörpers einen äußersten Bereich (12) weg von dem Ventilsitz umfasst, wobei der äußere Bereich in der Höhe in Bezug auf den Ventilsitz abgesenkt ist, um das Auswärtsbiegen der flexiblen Ventiltellerhalterungen zu erleichtern.

11. Ventil nach einem der vorstehenden Ansprüche, wobei die Basisabschnitte der Vielzahl von Ventiltellerhalterungen oben auf einem ersten äußeren Bereich (14) der oberen Fläche des Bodens des Ventilkörpers bereitgestellt werden, wobei der erste äußere Bereich an den Ventilsitz angrenzt und den Ventilsitz umgibt und der erste äußere Bereich in Bezug auf den Ventilsitz erhöht ist, wobei vorzugsweise die obere Fläche des Bodens des Ventilkörpers ferner einen zweiten äußeren Bereich (15) umfasst, der an den ersten äußeren Bereich angrenzt und den ersten äußeren Bereich umgibt, wobei der zweite äußere Bereich in der Auswärtsrichtung zwischen dem ersten äußeren Bereich (14) und dem äußersten Bereich (12) nach unten hin geneigt ist.

12. Ventil nach einem der vorstehenden Ansprüche, wobei der Ventilsitz einen oder mehrere eingesenkte Abschnitte (13) umfasst, wobei die eingesenkten Abschnitte laterale Abmessungen aufweisen, die kleiner als der Ventilteller sind, und wobei jede der einen oder mehreren Öffnungen in einem eingesenkten Abschnitt des Ventilsitzes endet.

13. Verfahren zum Spritzgießen eines Einwegentgasungsventils nach einem der vorstehenden Ansprüche 1-12, das die folgenden Schritte umfasst:
- Bereitstellen einer Form zum Spritzgießen des Einwegentgasungsventils, wobei die Form umfasst:
- einen beweglichen einheitlichen zentralen Kern, der zumindest den unteren zentralen Raum des Ventilkörpers mit dem Ventilsitz und den Halteabschnitten der Ventiltellerhalterungen bildet,
- einen beweglichen peripheren Kern, der zumindest die Seitenoberflächen der Ventiltellerhalterungen bildet, die von dem unteren zentralen Raum weg orientiert sind, und einen Abschnitt der oberen Fläche des Bodens des Ventilkörpers, der den Ventilsitz und die Ventiltellerhalterungen umgibt, z.B. den zweiten äußeren Bereich, z.B. den zweiten äußeren Bereich und den äußersten Bereich,
- Einspritzen von geschmolzenem Kunststoff in die Form,
- Anheben des peripheren Kerns in eine Position, die zumindest höher als die Oberseite der geformten Ventiltellerhalterungen ist, und
- nach dem Anheben des peripheren Kerns, Anheben des einheitlichen zentralen Kerns, wobei sich während des Anhebens die flexiblen Ventiltellerhalterungen in Bezug auf den zentralen Raum in einem solchen Ausmaß elastisch auswärts biegen, dass sich der Halteabschnitt jeder Ventiltellerhalterung außerhalb des zentralen Raums befindet und von dem einheitlichen zentralen Kern gelöst wird.

14. Verfahren zum Zusammenbau eines Einwegentgasungsventils, das die folgenden Schritte umfasst:
- Bereitstellen eines Ventilkörpers nach einem der vorstehenden Ansprüche 1-12,
- Bereitstellen eines Ventiltellers nach einem der vorstehenden Ansprüche 1-12,
- Positionieren des Ventiltellers oberhalb des unteren zentralen Bereichs,
- Absenken des Ventiltellers in eine Position innerhalb des unteren zentralen Bereichs, wobei sich die flexiblen Ventiltellerhalterungen während des Absenkens elastisch auswärts biegen.

15. Behälter zum Konservieren von Waren, z.B. Röstkaffee, z.B. ein mit Röstkaffee gefüllter Röstkaffeebehälter, wobei der Behälter umfasst:
- einen Behälter mit einer Wand,
- ein Einwegentgasungsventil, das über einer Öffnung in der Wand an der Innenseite des Behälters angebracht ist, wobei das Einwegentgasungsventil nach einem der vorstehenden Ansprüche 1-12 ausgebildet ist.

## Revendications

1. Clapet de dégazage unidirectionnel (1) destiné à dégazer un récipient, par exemple un récipient de café torréfié, ledit clapet comprenant :
- un corps de clapet en plastique (2) comprenant un fond (3) et un bord périphérique (4) s'étendant depuis ledit fond, ledit bord périphérique étant conçu pour être attaché audit récipient, ledit fond et ledit bord périphérique délimitant une chambre (5) qui est ouverte au sommet,
dans lequel ledit fond comprend un siège de clapet (6) sur la face supérieure dudit fond,
dans lequel un espace central (7) à l'intérieur de ladite chambre est formé par l'espace au-dessus dudit siège de clapet,
dans lequel ledit corps de clapet en plastique comprend une pluralité d'éléments de retenue de disque de clapet (8), chaque élément de retenue ayant une partie de base (81) s'étendant dans ladite chambre depuis ledit fond et une partie de retenue (82) vers l'intérieur depuis ladite partie de base, dans lequel toutes les parties de base bordent ledit espace central de façon à entourer ledit siège de clapet et dans lequel lesdites parties de retenue s'étendent chacune vers l'intérieur depuis ladite partie de base dans ledit espace central à une certaine distance du siège de clapet, de telle sorte que ladite pluralité d'éléments de retenue de disque de clapet et le siège de clapet entourent un espace central inférieur (11) dudit espace central,
et dans lequel une ou plusieurs ouvertures (9) s'étendent à travers le fond et se terminent à l'intérieur dudit siège de clapet,
- un disque de clapet (10), ledit disque de clapet étant prévu à l'intérieur dudit espace central inférieur et limité à celui-ci par lesdits éléments de retenue de disque de clapet, ledit disque de clapet étant adapté pour couvrir une ou plusieurs ouvertures, **caractérisé en ce que**
chaque élément de retenue de disque de clapet (8) est flexible, permettant une courbure élastique vers l'extérieur par rapport à l'espace central dans une mesure telle que la partie de retenue dudit élément de retenue de disque de clapet se trouve à l'extérieur de l'espace central.

2. Clapet selon la revendication 1, dans lequel, en vue de côté, la largeur de l'élément de retenue de disque de clapet proche du fond est inférieure à la largeur d'une partie au sommet de celui-ci.

3. Clapet selon l'une quelconque des revendications précédentes, dans lequel, en vue de côté, la partie de retenue comprend une partie inférieure qui depuis son fond vers le haut s'élargit progressivement latéralement dans ledit espace central.

4. Clapet selon l'une quelconque des revendications précédentes, dans lequel, en vue de côté, la partie de retenue comprend une partie de sommet en dessous du sommet dudit élément de retenue de disque de clapet qui depuis ledit sommet vers le bas, s'élargit progressivement latéralement dans ledit espace central.

5. Clapet selon l'une quelconque des revendications précédentes, dans lequel, en vue de côté, la largeur de la partie de base dudit disque de clapet est sensiblement la même ou plus petite que la largeur la plus grande de la partie de retenue.

6. Clapet selon l'une quelconque des revendications précédentes, dans lequel, en vue de côté, la partie de retenue a une forme triangulaire, par exemple dans lequel ladite forme triangulaire est une forme triangulaire à angle aigu, dans lequel, de préférence, ladite forme triangulaire a un côté supérieur et un côté inférieur, dans lequel ledit côté inférieur est plus court que ledit côté supérieur, et dans lequel, de préférence, le coin dudit triangle dans la région centrale et le sommet de l'élément de retenue de disque de clapet est arrondi.

7. Clapet selon l'une quelconque des revendications précédentes, dans lequel le clapet est pourvu d'un filtre sur ou en retrait dans la face inférieure du fond du corps de clapet en dessous dudit siège de clapet, ledit filtre étant par exemple fixé par thermo-scellage, par exemple, scellage aux ultrasons, audit corps de clapet.

8. Clapet selon l'une quelconque des revendications précédentes, dans lequel la hauteur de la partie de base entre le fond dudit corps de clapet et le début de la partie de retenue est inférieure à la moitié de la hauteur de l'élément de retenue de disque de clapet.

9. Clapet selon l'une quelconque des revendications précédentes, dans lequel, le long de la direction d'extension de la partie de retenue dudit élément de retenue de disque de clapet, la partie de retenue de l'élément de retenue de disque de clapet est effilée latéralement.

10. Clapet selon l'une quelconque des revendications précédentes, dans lequel la face supérieure du fond du corps de clapet comprend une zone la plus à l'extérieur (12) à l'écart dudit siège de clapet, dans lequel ladite zone externe est abaissée en hauteur par rapport au siège de clapet pour faciliter la courbure vers l'extérieur des éléments de retenue de disque de clapet flexibles.

11. Clapet selon l'une quelconque des revendications précédentes, dans lequel lesdites parties de base de la pluralité d'éléments de retenue de disque de clapet sont prévues au sommet d'une première zone externe (14) de la face supérieure du fond du corps de clapet, ladite première zone externe étant adjacente au siège de clapet et l'entourant et ladite première zone externe étant élevée par rapport au siège de clapet, dans lequel, de préférence, ladite face supérieure du fond du corps de clapet comprend en outre une seconde zone externe (15) adjacente à la première zone externe et l'entourant, ladite seconde zone externe étant inclinée vers le bas dans la direction vers l'extérieur entre la première zone externe (14) et la zone la plus à l'extérieur (12).

12. Clapet selon l'une quelconque des revendications précédentes, dans lequel le siège de clapet comprend une ou plusieurs parties en retrait (13), lesdites parties en retrait ayant des dimensions latérales plus petites que le disque de clapet, et dans lequel chacune des une ou plusieurs ouvertures se termine dans une partie en retrait du siège de clapet.

13. Procédé de moulage par injection d'un clapet de dégazage unidirectionnel selon l'une quelconque des revendications 1 à 12 précédentes, comprenant les étapes de :
- fourniture d'un moule pour le moulage par injection dudit clapet de dégazage unidirectionnel, ledit moule comprenant :
- un noyau central unitaire mobile qui forme au moins l'espace centrale inférieur dudit corps de clapet avec ledit siège de clapet et les parties de retenue desdits éléments de retenue de disque de clapet,
- un noyau périphérique mobile qui forme au moins les surfaces latérales desdits éléments de retenue de disque de clapet qui sont orientés à l'écart dudit espace central inférieur, et une partie de la face supérieure du fond du corps de clapet entourant ledit siège de clapet et lesdits éléments de retenue de disque de clapet, par exemple, ladite seconde zone externe, par exemple, ladite seconde zone externe et ladite zone la plus à l'extérieur,
- injection de plastique fondu dans ledit moule,
- soulèvement dudit noyau périphérique à une position au moins plus élevée que le sommet des éléments de retenue de disque de clapet moulés, et
- après soulèvement dudit noyau périphérique, soulèvement dudit noyau central unitaire, moyennant quoi pendant ledit soulèvement les éléments de retenue de disque de clapet flexibles se courbent élastiquement vers l'extérieur par rapport à l'espace central dans une mesure telle que la partie de retenue de chaque élément de retenue de clapet est à l'extérieur de l'espace central et libérée du noyau central unitaire.

14. Procédé d'assemblage d'un clapet de dégazage unidirectionnel comprenant les étapes de :
- fourniture d'un corps de clapet selon l'une quelconque des revendications 1 à 12 précédentes,
- fourniture d'un disque de clapet selon l'une quelconque des revendications 1 à 12 précédentes,
- positionnement dudit disque de clapet au-dessus de ladite région centrale inférieure,
- abaissement dudit disque de clapet à une position à l'intérieur de ladite région centrale inférieure, moyennant quoi pendant ledit abaissement les éléments de retenue de disque de clapet flexibles se courbent élastiquement vers l'extérieur.

15. Récipient destiné à conserver des aliments, par exemple, du café torréfié, par exemple un récipient de café torréfié rempli de café torréfié, ledit récipient comprenant :
- un récipient ayant une paroi,
- un clapet de dégazage unidirectionnel fixé sur une ouverture dans ladite paroi sur l'intérieur dudit récipient, ledit clapet de dégazage unidirectionnel étant intégré selon l'une quelconque des revendications 1 à 12 précédentes.
